# FASCICULE DE BREVET EUROPEEN

(11) **EP 0 398 787 B1**
(45) Date de publication et mention de la délivrance du brevet: **21.04.1993**
(21) Numéro de dépôt: 90401240.8
(22) Date de dépôt: 10.05.1990
(51) Int. Cl.: F02K 9/97, F02K 1/82

(54) **Dispositif frangé de protection thermique de structure et procédé adapté à sa fabrication**
Getuffte Wärmeschutzschicht und ihre Herstellungsweise
Tufted thermal protection layer and production method therefor

(30) Priorité: 16.05.1989 FR 8906379
(43) Date de publication de la demande: 22.11.1990
(73) Titulaire: AEROSPATIALE Société Nationale Industrielle, 75781 Paris Cédex 16 (FR)
(72) Inventeur: Ferrier, Christiane, F-91430 Igny (FR); Claudel, Jean, F-94800 Villejuif (FR)
(74) Mandataire: Rinuy, Santarelli

(56) Documents cités:
- EP-A- 0 174 886
- FR-A- 2 506 901
- GB-A- 2 191 115
- US-A- 3 257 803
- US-A- 3 284 893
- US-A- 3 285 518

## Description

La présente invention concerne une couche de protection thermique destinée à protéger la virole d'une chambre de moteur statoréacteur.

Plus particulièrement, l'invention concerne la mise au point d'un dispositif de protection thermique interne, et d'un procédé de fabrication correspondant, destiné à des structures creuses soumises, à un écoulement ablatif de gaz corrosifs à grande vitesse et haute température, et à des vibrations de niveau élevé, en particulier inhérentes au fonctionnement.

Dans l'état actuel de la technique, les couches de protection thermiques de telles structures sont constituées de composites à liants organiques, organo-métalliques ou minéraux, capables d'inclure des renforts du type poudres, fibres, tissus organiques ou minéraux. Sous l'action des gaz chauds, le matériau ablatable subit le phénomène de pyrolyse. La pyrolyse s'accompagne d'une dégradation de la chaîne carbonée ou organi-silicique du liant qui rend la scorie fragile et cassante dans la masse. Pour pallier cette fragilisation, la couche de protection thermique est couramment armée, suivant des techniques diverses.

Il est en effet connu que, pour un matériau ablatable de ce type, soumis à l'érosion des gaz chauds et aux vibrations, l'ablation est réduite lorsque le matériau est armé. L'armature noyée dans le matériau isolant peut être métallique ou non, tissée ou fibreuse.

Le brevet FR-2.569.237 (ou US-4.655.866) décrit un tel dispositif armé de protection thermique, et le processus de fabrication correspondant, pour la protection thermique de parois longées par des veines d'écoulement de gaz, telles que les chambres de moteurs statoréacteurs.

L'intérêt de ce brevet antérieur a été de permettre l'élaboration d'une couche de protection souple, par exemple en silicone, renforcée en particulier par une armature orientée par rapport à l'écoulement des gaz, qui confère une bonne tenue à l'ablation et aux arrachements provoqués par les vibrations dues au fonctionnement du moteur.

L'invention a pour objet d'améliorer les performances d'un dispositif conforme au brevet précité, notamment en ce qui concerne sa tenue mécanique après pyrolyse du liant.

L'invention propose un dispositif de protection thermique destiné à la protection de parois de structures soumises à un écoulement ablatif à haute température en présence de vibrations, du type comportant, noyée dans une matrice thermiquement isolante, une armature réfractaire formée d'un matelas frangé comportant une partie maillée soumise à l'écoulement ablatif et des franges destinées à être dirigées vers la paroi de structure à protéger, caractérisé en ce qu'il comporte en outre un tissu réfractaire à mailles évidées, parallèle à la partie maillée de l'armature et traversé, à la faveur de ses propres mailles, par lesdites franges.

L'implantation dans un tel matelas frangé d'un tissu à fils avantageusement torsadés ou spiralés, a pour effet de maintenir l'intégrité de la scorie après pyrolyse en profondeur de la protection thermique et même après dégradation du collage sur la paroi à protéger. Le tissu spiralé a pour effet de lier les couches de franges entre elles et de solidifier l'ensemble.

Le tissu réfractaire est avantageusement formé de fils spiralés parallèles qui s'interpénètrent, ce qui lui confère une grande souplesse transversalement à ces fils.

Le tissu réfractaire peut être choisi notamment parmi les matériaux suivants : acier, carbone imprégné d'un rigidimère, silice imprégnée d'une résine rigidimère ou d'une autre résine organique ou non organique.

Selon des dispositions préférées, non limitatives :
- la matrice thermiquement isolante est à base de silicone,
- cette matrice est chargée en fibres et en poudre de carbure de silicium, ou en toute autre matière (poudre) réfractaire,
- le matelas frangé est en carbure de silicium, ou en toute autre matière (fibre) réfractaire,
- le dispositif est cylindrique, l'armature étant formée d'un ruban frangé enroulé en hélice.

L'invention propose également un procédé de fabrication d'un dispositif de protection thermique destiné à la protection interne d'une paroi cylindrique soumise à un écoulement ablatif à haute température en présence de vibrations selon lequel :
- on bobine un ruban réfractaire à franges sur un mandrin en sorte que les franges soient orientées radialement par rapport à ce mandrin en sorte de former un matelas frangé,
- on imprègne ce matelas frangé avec une composition polymérisable thermiquement isolante,
- on place un tissu réfractaire à mailles évidées autour du matelas frangé imprégné,
- on fait pénétrer les fils constitutifs du tissu entre les franges du matelas frangé, et
- on fait cuire l'ensemble.

Selon des dispositions préférées, non limitatives :
- on fait pénétrer les fils du tissu entre les franges du matelas frangé par bobinage autour de ce tissu d'un fil ou ruban,
- ce fil ou ruban est réfractaire,
- ce fil ou ruban est en acier,
- ce fil ou ruban est en carbure de silicium,
- ce fil ou ruban est en carbone,
- ce fil ou ruban est en silice,
- on usine ledit ensemble pour l'amener au diamètre intérieur de la paroi cylindrique à protéger,
- on imprègne les franges principalement en leur base en sorte de faciliter la pénétration de l'extrémité libre de ces franges dans les mailles du tissu,
- on effectue la cuisson sous pression,
- la matrice thermiquement isolante étant à base de silicone, on effectue la cuisson à 100°C pendant 1h30 sous une pression de 10 bars,
- le ruban frangé est à base de carbure de silicium,
- le tissu est formé de fils spiralés parallèles qui s'interpénètrent,
- le tissu est en acier.

Les performances d'une couche de protection conforme à l'invention dépendent des paramètres suivants :
- le choix de la frange (nature et dimension de ses fibres) : il sera fait en fonction de l'épaisseur de la protection thermique à obtenir, choix préalable du type de structuration (tissu) retenu, et de la profondeur de son implantation ; la frange, une fois bobinée, doit être dans un plan aussi proche que possible du plan radial et l'extrémité des franges ne doit pas être imprégnée (ou être peu imprégnée) afin que lesdites franges puissent facilement s'engager dans la maille du tissu spiralé.
- la tension du liage de la fibre ou ruban : cette tension influe directement sur l'inclinaison des franges et leur aptitude à rester dans un plan radial du mandrin.
- la définition de la composition d'imprégnation et donc sa viscosité : une composition ayant une viscosité trop faible ne convient pas car elle peut couler ; en fait, la composition doit avoir une consistance lui permettant de mouiller parfaitement les franges tout en restant elle-même suffisamment thixotrope, pour garder au ruban sa forme première et à ne pas couler.
- les paramètres machines (pression d'alimentation, dimension et positionnement de la frange) : ils sont autant de facteurs qui permettent d'obtenir une base correcte pour l'implantation du maillage.

Des objets, caractéristiques et avantages de l'invention ressortent de la description qui suit, donnée à titre d'exemple non limitatif, en regard des dessins annexés sur lesquels :
- la figure 1 est une vue partielle en perspective d'un dispositif de protection thermique conforme à l'invention ;
- la figure 2 est une vue agrandie, avec arrachement partiel, du détail I de la figure 1 ;
- la figure 3 est une vue latérale du dispositif de la figure 2, selon la flèche III de la figure 2, sous une forme éclatée faisant apparaître les principales étapes de fabrication de ce dispositif ;
- la figure 4 est une vue en perspective d'un mandrin autour duquel on bobine un ruban frangé, selon une première étape du procédé de fabrication du dispositif des figures 1 à 3 ;
- la figure 5 est une vue en perspective d'une feuille de tissu et du ruban bobiné selon une étape suivante sur le point d'être enroulée autour du mandrin ; et
- la figure 6 est une vue, en perspective d'un ruban réfractaire en train d'être bobiné autour du mandrin, du ruban et de la feuille de tissu pour, selon encore une autre étape du procédé de fabrication, faire pénétrer cette feuille de tissu entre les franges du ruban bobiné.

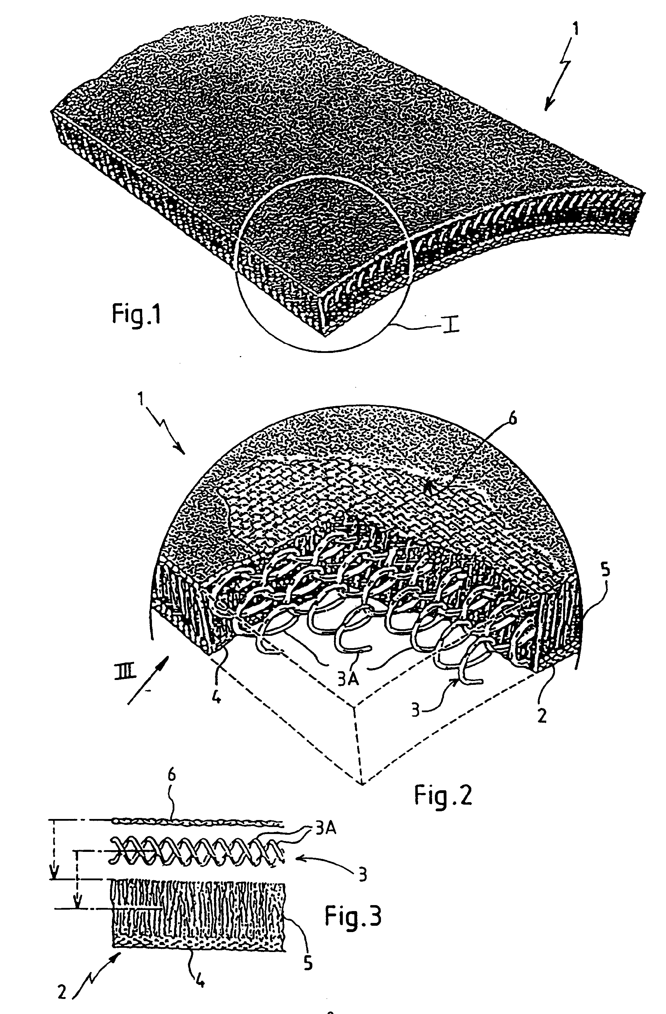

Ainsi qu'il ressort des figures 1 à 3, un dispositif de protection thermique 1 conforme à l'invention comporte, noyée dans une matrice thermiquement isolante qui l'imprègne, une armature réfractaire 2 et un tissu à mailles évidées 3.

Cette armature réfractaire 2 est formée d'un matelas frangé comportant une partie maillée 4 destinée à être soumise à l'écoulement ablatif, et des franges 5 destinées à être dirigées vers la paroi de structure à protéger.

Le tissu 3 à mailles évidées est ici formé de fils spiralés 3A parallèles qui s'interpénètrent.

Ces fils spiralés 3A sont entièrement engagés entre les franges 5 de l'armature 2, lesquelles traversent donc le tissu 3 de part en part en passant au travers de ses mailles évidées.

La partie maillée est avantageusement maillée y compris dans le sens de son épaisseur.

Une couche de protection 6, avantageusement réfractaire, est ici disposée en regard des extrémités de franges auxquelles elles sont fixées, par exemple par l'intermédiaire de la matrice isolante.

Cette matière est avantageusement polymérisable.

Lorsque, comme c'est le cas aux figures 1 à 3, le dispositif 1 a une conformation partiellement cylindrique, les fils spiralés 3A sont orientés parallèlement à la génératrice du cylindre grâce à quoi, ici, la courbure du dispositif n'impose aucune déformation sensible des fils spiralés eux-mêmes.

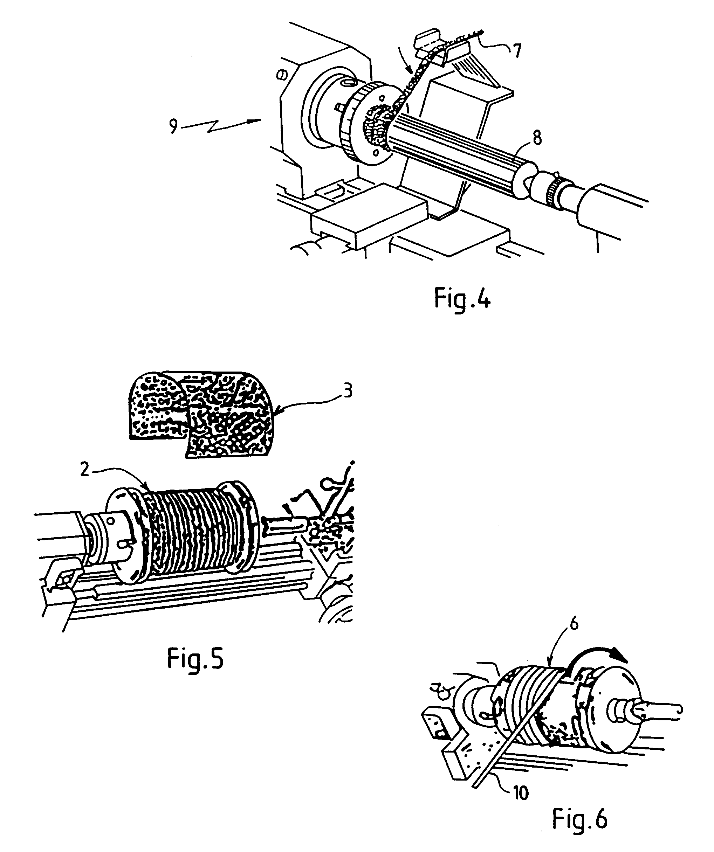

Les figures 4 à 6 illustrent les principales étapes de fabrication de ce dispositif :
- à la figure 4 on bobine un ruban frangé 7 (non imprégné) sur un mandrin 8 de diamètre au moins égal au diamètre intérieur utile de la chambre de combustion, monté sur une machine 9,
- on imprègne le matelas frangé 2 ainsi réalisé, au moyen d'un appareillage de transfert non représenté, (pot et presse de transfert ou pistolet de transfert par exemple) en appliquant entre chaque rangée de franges, une composition silicone chargée assurant l'imprégnation de la matrice réfractaire de la protection (et constituant la matrice isolante précitée),
- à la figure 5 on implante dans le matelas 2 bobiné et imprégné, le tissu spiralé métallique 3 que l'on frette, conformément à la figure 6, au moyen d'un bobinage de fil ou ruban réfractaire 10, constituant la couche 6 précitée,
- on met en autoclave (non représenté) le mandrin ainsi bobiné pour cuisson à une température de 100°C pendant 1h30 sous une pression de 10 bars,
- on met à épaisseur la couche de protection thermique 1 par usinage de préférence jusqu'à affleurement du tissu métallique.

Les fils spiralés du tissu 3 sont parallèles au mandrin.

Pour réaliser au mieux cette opération, il faut :
- que les extrémités des franges soient pas ou peu imprégnées de manière à s'engager aisément dans la maille du tissu,
- que les franges soient dans un plan aussi proche que possible d'une direction radiale au mandrin,
- que la matrice silicone ait une consistance telle que la frange soit parfaitement mouillée mais qu'il soit suffisamment thixotrope, de manière à garder au ruban sa forme première et à ne pas couler.

Selon un exemple de réalisation, pour la réalisation d'une protection thermique, les matériaux sont :
- franges en carbure de silicum
   - nombre de fil : 1000 filaments/mèche
   - longueur : 12 mm
   - hauteur de pied : 3,5 mm
   - nombre de boucle/cm: 3
   - poids/m : 3,8 g
- composition du mélange (réalisé de toute manière connue appropriée) :
   - RTV 630 A (100 parties)
   - RTV 630 B (10 parties)
      Fournisseur G.E.
   - SiC poudre (25 parties)
   - SiC fibres (6 parties)
   - retardateur type PT 67 (2 parties)
- tissu spiralé inox
   - vide (écartement des fils) : 3 mm
   - épaisseur des fils : 6/10 mm
   - pas des spirales : 5 mm

Avec ces matériaux on a obtenu un produit de caractéristiques moyennes suivantes :
- eₘ: ≈ 8,5 à 9 mm
- dₘ: ≈ 1,8
- λₘ: ≈ 0,53 W/m/°C
- Cₘ: ≈ 1,15/g/°

Avec les conventions suivantes :
- eₘ: = épaisseur moyenne du revêtement
- dₘ: = masse volumique moyenne
- λₘ: = conductivité thermique moyenne
- Cₘ: = chaleur spécifique moyenne

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif de protection thermique (1) destiné à la protection de parois de structures soumises à un écoulement ablatif à haute température en présence de vibrations, du type comportant, noyée dans une matrice thermiquement isolante, une armature réfractaire (2) formée d'un matelas frangé comportant une partie maillée (4) soumise à l'écoulement ablatif et des franges (5) destinées à être dirigées vers la paroi de structure à protéger, caractérisé en ce qu'il comporte en outre un tissu réfractaire (3) à mailles évidées, parallèle à la partie maillée (4) de l'armature et traversé, à la faveur de ses propres mailles, par lesdites franges.

2. Dispositif selon la revendication 1, caractérisé en ce que le tissu réfractaire (3) est formé de fils spiralés (3A) parallèles qui s'interpénètrent.

3. Dispositif selon la revendication 1 ou la revendication 2, caractérisé en ce que le tissu est en acier.

4. Dispositif selon la revendication 1 ou la revendication 2, caractérisé en ce que le tissu est en carbone imprégné d'une résine rigidimère.

5. Dispositif selon la revendication 1 ou la revendication 2, caractérisé en ce que le tissu est en silice imprégnée d'une résine.

6. Dispositif selon l'une quelconque des revendications 1 à 5, caractérisé en ce que la matrice thermiquement isolante est à base de silicone.

7. Dispositif selon la revendication 6, caractérisé en ce que cette matrice est chargée en fibres et en poudre de carbure de silicium ou toute autre poudre réfractaire.

8. Dispositif selon l'une quelconque des revendications 1 à 7, caractérisé en ce que le matelas frangé (2) est en carbure de silicium ou tout autre fibre réfractaire.

9. Dispositif selon l'une quelconque des revendications 1 à 8, caractérisé en ce qu'il est cylindrique, l'armature étant formée d'un ruban frangé (7) enroulé en hélice.

10. Procédé de fabrication d'un dispositif de protection thermique (1) destiné à la protection interne d'une paroi cylindrique soumise à un écoulement ablatif à haute température en présence de vibrations selon lequel :
- on bobine un ruban réfractaire (7) à franges (5) sur un mandrin (8) en sorte que les franges soient orientées radialement par rapport à ce mandrin en sorte de former un matelas frangé (2),
- on imprègne ce matelas frangé avec une composition thermiquement isolante,
- on place un tissu réfractaire (3) à mailles évidées autour du matelas frangé imprégné,
- on fait pénétrer les fils constitutifs du tissu entre les franges du matelas frangé, et
- on fait cuire l'ensemble.

11. Procédé selon la revendication 10, caractérisé en ce qu'on fait pénétrer les fils (3A) du tissu entre les franges (5) du matelas frangé par bobinage autour de ce tissu d'un fil ou ruban (10).

12. Procédé selon la revendication 11, caractérisé en ce que ce fil ou ruban (10) est réfractaire.

13. Procédé selon la revendication 12, caractérisé en ce que ce fil ou ruban est en acier.

14. Procédé selon la revendication 12, caractérisé en ce que ce fil ou ruban est en carbure de silicium.

15. Procédé selon la revendication 12, caractérisé en ce que ce fil ou ruban est en carbone.

16. Procédé selon la revendication 12, caractérisé en ce que fil ou ruban est en silice.

17. Procédé selon l'une quelconque des revendications 10 à 16, caractérisé en ce qu'on usine ledit ensemble pour l'amener au diamètre intérieur de la paroi cylindrique à protéger.

18. Procédé selon l'une quelconque des revendications 10 à 16, caractérisé en ce qu'on imprègne principalement la base de franges en sorte de faciliter la pénétration de l'extrémité libre des franges dans les mailles du tissu.

19. Procédé selon l'une quelconque des revendications 10 à 18, caractérisé en ce qu'on effectue la cuisson sous pression.

20. Procédé selon la revendication 19, caractérisé en ce que la matrice thermiquement isolante étant à base de silicone, on effectue la cuisson à 100°C pendant 1h30 sous une pression de 10 bars.

21. Procédé selon l'une quelconque des revendications 10 à 20, caractérisé en ce que le ruban frangé est à base de carbure de silicium.

22. Procédé selon l'une quelconque des revendications 10 à 21, caractérisé en ce que le tissu est formé de fils spiralés parallèles qui s'interpénètrent.

23. Procédé selon la revendication 22, caractérisé en ce que le tissu est en acier.

## Claims

1. A thermal protection device (1) adapted for the protection of walls of structures exposed to ablatitious flow at high temperature in the presence of vibrations, being of the type comprising, embedded in a thermally insulating matrix, a refractory armature (2) comprising a fringed mattress including a meshed portion (4) which is exposed to the ablatitious flow, together with fringes (5) adapted to be directed towards the wall of the structure to be protected, characterised in that it further includes a refractory woven layer (3), parallel to the meshed portion (4) of the armature and having open meshes with the said fringes passing through its meshes.

2. A device according to Claim 1, characterised in that the refractory woven layer (3) consists of parallel, interpenetrating, filaments (3A) in spiral configuration.

3. A device according to Claim 1 or Claim 2, characterised in that the woven layer is of steel.

4. A device according to Claim 1 or Claim 2, characterised in that the woven layer is of carbon impregnated with a stiffening resin.

5. A device according to Claim 1 or Claim 2, characterised in that the woven layer is of silica impregnated with a resin.

6. A device according to any one of Claims 1 to 5, characterised in that the thermally insulating matrix is silicone based.

7. A device according to Claim 6, characterised in that the said matrix is filled with fibres and silicon carbide powder, or any other refractory powder.

8. A device according to any one of Claims 1 to 7, characterised in that the fringed mattress (2) is of silicon carbide or any other refractory fibre.

9. A device according to any one of Claims 1 to 8, characterised in that it is cylindrical, the armature comprising a fringed tape (7) wound in helical configuration.

10. A method of making a thermal protection device (1) adapted for the internal protection of a cylindrical wall which is subjected to an ablatitious flow at high temperature in the presence of vibrations, wherein:
- a refractory tape (7) having fringes (5) is wound on a mandrel (8) in such a way that the fringes are orientated radially with respect to the said mandrel, so as to form a fringed mattress (2),
- the said fringed mattress is impregnated with a thermally insulating composition,
- a refractory woven layer (3) having open meshes is placed around the impregnated fringed mattress,
- the filaments constituting the woven layer are inserted between the fringes of the fringed mattress, and
- the whole is heat treated.

11. A method according to Claim 10, characterised in that the filaments (3A) of the woven layer are inserted between the fringes (5) of the fringed mattress by winding a wire or tape (10) around the said woven layer.

12. A method according to Claim 11, characterised in that the said wire or tape (10) is refractory.

13. A method according to Claim 12, characterised in that the said wire or tape is of steel.

14. A method according to Claim 12, characterised in that the said wire or tape is of silicon carbide.

15. A method according to Claim 12, characterised in that the said wire or tape is of carbon.

16. A method according to Claim 12, characterised in that the said wire or tape is of silica.

17. A method according to any one of Claims 10 to 16, characterised in that the whole is machined so as to match the internal diameter of the cylindrical wall to be protected.

18. A method according to any one of Claims 10 to 16, characterised in that it is mainly the base of the fringes that is impregnated, so as to facilitate the penetration of the free end of the fringes into the meshes of the woven layer.

19. A method according to any one of Claims 10 to 18, characterised in that the heat treatment is carried out under pressure.

20. A method according to Claim 19, characterised in that, the thermally insulating matrix being silicone based, the heat treatment is carried out at 100°C for 1 hour 30 minutes under a pressure of 10 bar.

21. A method according to any one of Claims 10 to 20, characterised in that the fringed tape is silicon carbide based.

22. A method according to any one of Claims 10 to 21, characterised in that the woven layer comprises interpenetrating, parallel filaments in helical configuration.

23. A method according to Claim 22, characterised in that the woven layer is of steel.

## Patentansprüche

1. Wärmeschutzeinrichtung (1) zum Schutz von Wänden von Strukturen, die bei Vorhandensein von Schwingungen einer ablativ wirksamen Strömung mit hoher Temperatur ausgesetzt sind, mit einer in eine wärmeisolierende Matrix eingebetteten hitzebeständigen Bewehrung (2), die aus einer getufften Matte gebildet ist, die einen mit Maschen versehenen Bereich (4), welcher der ablativ wirksamen Strömung ausgesetzt ist, und Fransen (5) zur Ausrichtung gegen die zu schützende Strukturwand aufweist, **dadurch gekennzeichnet**, daß ferner ein hitzebeständiges Gewebe (3) mit Hohlmaschen vorgesehen ist, das parallel zum maschenartigen Teil (4) der Bewehrung verläuft und aufgrund seiner eigenen Maschen von besagten Fransen durchdrungen wird.

2. Einrichtung nach Anspruch 1, dadurch gekennzeichnet, daß das hitzebeständige Gewebe (3) von parallelen, aus Fäden gewickelten Spiralen (3A) gebildet ist, die sich gegenseitig durchdringen.

3. Einrichtung nach Anspruch 1 oder nach Anspruch 2, dadurch gekennzeichnet, daß das Gewebe aus Stahl besteht.

4. Einrichtung nach Anspruch 1 oder nach Anspruch 2, dadurch gekennzeichnet, daß das Gewebe aus mit einem monoplastischen Harz geringer Dehnung imprägniertem Kohlenstoff besteht.

5. Einrichtung nach Anspruch 1 oder nach Anspruch 2, dadurch gekennzeichnet, daß das Gewebe aus mit einem Harz imprägniertem Siliziumdioxyd besteht.

6. Einrichtung nach einem der Ansprüche 1 bis 5, dadurch gekennzeichnet, daß die wärmeisolierenden Matrix aus einem Material auf Silikonbasis besteht.

7. Einrichtung nach Anspruch 6, dadurch gekennzeichnet, daß diese Matrix mit Fasern und Pulver aus Siliziumkarbid oder irgendeinem anderen hitzebeständigen Pulver gefüllt ist.

8. Einrichtung nach einem der Ansprüche 1 bis 7, dadurch gekennzeichnet, daß die getuffte Matte (2) aus Siliziumkarbid oder irgendeiner anderen hitzebeständigen Faser besteht.

9. Einrichtung nach einem der Ansprüche 1 bis 8, dadurch gekennzeichnet, daß sie zylindrisch ist, wobei die Bewehrung aus einem getufften, schraubenförmig gewickelten Streifen (7) gebildet ist.

10. Verfahren zur Herstellung einer Wärmeschutzeinrichtung (1) zum inneren Schutz einer zylindrischen Wand, die bei Vorhandensein von Schwingungen einer ablativ wirksamen Strömung mit hoher Temperatur ausgesetzt ist, mit folgenden Merkmalen:
- man wickelt einen hitzebeständigen, mit Fransen (5) versehenen Streifen (7) so auf einen Dorn (8), daß die Fransen in bezug auf diesen Dorn radial ausgerichtet sind, so daß eine getuffte Matte (2) gebildet wird,
- man imprägniert diese getuffte Matte mit einem wärmeisolierenden Stoff,
- man legt ein hitzebeständiges Gewebe (3) mit Hohlmaschen um die imprägnierte, getuffte Matte,
- man bewirkt, daß die das Gewebe bildenden Fäden zwischen die Fransen der getufften Matte eindringen, und
- man läßt die Einheit aushärten.

11. Verfahren nach Anspruch 10, dadurch gekennzeichnet, daß man die Fäden (3A) des Gewebes zwischen die Fransen (5) der getufften Matte durch Umwickeln dieses Gewebes mit einem Faden oder Streifen (10) eindringen läßt.

12. Verfahren nach Anspruch 11, dadurch gekennzeichnet, daß dieser Faden oder Streifen ( 10) hitzebeständig ist.

13. Verfahren nach Anspruch 12, dadurch gekennzeichnet, daß dieser Faden oder Streifen aus Stahl besteht.

14. Verfahren nach Anspruch 12, dadurch gekennzeichnet, daß dieser Faden oder Streifen aus Siliziumkarbid besteht.

15. Verfahren nach Anspruch 12, dadurch gekennzeichnet, daß dieser Draht oder Streifen aus Kohlenstoff besteht.

16. Verfahren nach Anspruch 12, dadurch gekennzeichnet, daß der Faden oder Streifen aus Silizumdioxyd besteht.

17. Verfahren nach einem der Ansprüche 10 bis 16, dadurch gekennzeichnet, daß man die besagte Einheit bearbeitet, um sie am Innendurchmesser der zu schützenden zylindrischen Wand anzubringen.

18. Verfahren nach einem der Ansprüche 10 bis 16, dadurch gekennzeichnet, daß man hauptsächlich den Fuß der Fransen imprägniert, um das Eindringen der freien Enden der Fransen in die Maschen des Gewebes zu erleichtern.

19. Verfahren nach einem der Ansprüche 10 bis 18, dadurch gekennzeichnet, daß man das Aushärten unter Druck durchführt.

20. Verfahren nach Anspruch 19, dadurch gekennzeichnet, daß man, wenn die wärmeisolierende Matrix auf Silikon basiert, die Aushärtung bei 100°C während 1 Stunde 30 Minuten unter einem Druck von 10 bar durchführt.

21. Verfahren nach einem der Ansprüche 10 bis 20, dadurch gekennzeichnet, daß der getuffte Streifen aus einem auf Siliziumkarbid basierenden Material besteht.

22. Verfahren nach einem der Ansprüche 10 bis 21, dadurch gekennzeichnet, daß das Gewebe aus parallelen Spiralen von Fäden geformt ist, die sich gegenseitig durchdringen.

23. Verfahren nach Anspruch 22, dadurch gekennzeichnet, daß das Gewebe aus Stahl besteht.
